# EUROPÄISCHE PATENTSCHRIFT

(11) **EP 4 323 145 B1**
(45) Veröffentlichungstag und Bekanntmachung des Hinweises auf die Patenterteilung: **07.05.2025**
(21) Anmeldenummer: 22722265.0
(22) Anmeldetag: 12.04.2022
(51) Int. Cl.: E04C 5/01, B21F 13/00, B23P 17/06, B21H 8/00, B21K 23/00, B21C 37/04, B23D 19/00

(54) **VERFAHREN ZUR HERSTELLUNG VON METALLFASERN, INSBESONDERE VON STAHLFASERN**
METHOD FOR MANUFACTURING METAL FIBERS, MORE PARTICULARLY STEEL FIBERS
PROCÉDÉ DE FABRICATION DE FIBRES MÉTALLIQUES, PLUS PARTICULIÈREMENT DE FIBRES D'ACIER

(30) Priorität: 14.04.2021 DE 102021001946
(43) Veröffentlichungstag der Anmeldung: 21.02.2024
(73) Patentinhaber: Hacanoka GmbH, 89269 Vöhringen (DE)
(72) Erfinder: STAHL, Karl-Hermann, 89269 Vöhringen (DE); STAHL, Hansjörg, 89231 Neu-Ulm (DE)
(74) Vertreter: Baur & Weber Patentanwälte PartG mbB
(86) Internationale Anmeldenummer: PCT/EP2022/059742
(87) Internationale Veröffentlichungsnummer: WO 2022/218975

(56) Entgegenhaltungen:
- DE-A1- 102008 034 250
- DE-A1- 102017 006 298
- DE-A1- 102018 005 483
- GB-A- 882 701
- US-A- 1 400 278

## Beschreibung

Die Erfindung betrifft ein Verfahren zur Herstellung von Metallfasern nämlich von vergüteten oder unvergüteten Stahlfasern aus bandförmigem Flachmaterial, wobei die Metallfasern rechteckigen Querschnitt aufweisen und wenigstens eine der jeweils breiteren Faserseitenflächen mit wenigstens einer in Faserlängsrichtung verlaufenden V-förmigen Ankerkerbe versehen ist, wobei zur Bildung der Metallfasern ein Metallband in Längsrichtung mit Bruchkerben versehen wird, wodurch an deren Kerbgrund Trennstege gebildet werden, die bei späterer Trennung gratarme und bruchrauhe Trennflächen bilden.

Weiter betrifft die Erfindung auch eine Vorrichtung zur Durchführung dieses Verfahrens.

Metallfasern dieser Art sind bereits vorbeschrieben, insbesondere in der DE 10 2017 006 298 A1. Derartige Metallfasern dienen als Beigabe in Beton und haben die Aufgabe, die in Betonbauteilen auftretenden und eine Minderung der Zugbelastung verursachenden Risse zu kompensieren, also ihrerseits die Zugbelastung aufzunehmen und auf diese Weise, bildlich gesprochen, den Riss zu vernähen. Um dies zu erreichen, müssen die Metallfasern in möglichst großer Anzahl möglichst gleichmäßig in dem Bauteil verteilt sein. Hierzu sollte die Metallfaser dünn sein, so dass eine hohe Stückzahl je Gewichtseinheit und dadurch statistisch eine hohe Homogenität erreicht wird. Wichtig ist hierbei, dass die Metallfasern möglichst keine bzw. keine großen über ihre Oberfläche vorstehende Vorsprünge, wie etwa Haken an den Faserenden und dergleichen, aufweisen sollten, die ein "Verklumpen" der Metallfasern im Beton und damit eine "Igelbildung" verursachen könnten, die zu inhomogener Verteilung führen würden. Andererseits sind für die Wirkung der Metallfaser bei Zugbelastung gerade die Verankerungen gemeinsam mit der Festigkeit des verwendeten Werkstoffs entscheidend für die Zugbelastbarkeit.

Um die im Bauwesen festgelegten Leistungsvorgaben zu erfüllen, ist eine Abstimmung hinsichtlich der Gestaltung der Metallfaser einerseits und des zur Anwendung kommenden Faserwerkstoffs hinsichtlich Festigkeit und Dehnung andererseits erforderlich. Wichtig ist dabei im Rahmen der Aufgabenstellung der Erfindung insbesondere auch, eine möglichst einfache, kostengünstige Fertigungstechnik einsetzen zu können.

Diese Aufgabe wird in verfahrensmäßiger Hinsicht nach der Erfindung dadurch gelöst, dass als Metallband zunächst ein gegenüber der für die Metallfaser bei der späteren Verwendung geforderten Festigkeit angepasster Werkstoff zum Einsatz kommt, wobei das Metallband in einer ersten Fertigungslinie in Form eines Coils von einer angetriebenen und gesteuerten Ablaufhaspel einer Richt- und Transporteinheit zugeführt wird, die mit einer einen Freilauf ermöglichenden Überholkupplung versehen ist und eine nachgeordnete, zumindest den Bandanfang formierende Schopfschere aufweist, worauf das Metallband einer aus Oberwalze und Unterwalze bestehenden, als Walzwerkzeug ausgebildeten Profilierwalze zur Einbringung der Ankerkerben und der Bruchkerben zugeführt wird, und dass das Metallband schließlich von einer Aufhaspeleinrichtung wieder als Coil aufgewickelt oder in der entsprechenden Fertigungslinie weitergeführt wird.

Der durch die Erfindung erreichte Fortschritt besteht unter anderem darin, dass für den Umformprozess der Metallfasern, also insbesondere das Profilwalzen, ein angepasster Werkstoff vorgesehen werden kann, wodurch wegen der geringeren Biegeumformkraft für die Ankerkerben und damit eine geringere Walzkraft kleinere Walzen zum Einsatz kommen können. Das Metallband kann relativ dünn gewählt werden, so dass die Stege der Bruchkerben zwischen den Metallfaseradern sehr klein ausgeführt werden können und so die spätere Trennung vereinfachen. Die Anordnung der Ankerkerben auf der Ober- und Unterseite des Metallbandes, in welchen die Innenanker vorgesehen sind, ermöglicht es durch deren gegenseitigen Versatz durch eine Führungsfunktion, die Axialkräfte in leichter beherrschbaren Grenzen zu halten, was den maschinellen Aufwand deutlich reduziert. Schließlich ermöglicht es der beschriebene Fertigungsprozess des Kerbens, Vergüten und Trennens eine sehr platzsparende Lagerhaltung der Metallfaserbänder, da die Trennung zu Metallfasern bedarfsgerecht zu einem späteren Zeitpunkt vorgenommen werden kann, während in einem Behältnis, etwa einem Big-Bag, abgefüllte Metallfasern deutlich mehr Raum einnehmen und deren spätere Vereinzelung für die Beimengung in Beton aufwendig ist und es meist hierfür speziell eingerichteter Vorrichtungen bedarf.

Dabei können beide der jeweils breiteren Faserseitenflächen mit wenigstens einer in Faserlängsrichtung verlaufenden V-förmigen Ankerkerbe versehen sein.

Die Profilierwalze kann sowohl auf der Ober- und der Unterseite axial gegeneinander versetzt angeordnete Ankerkerben als auch Bruchkerben einbringen, wobei die beiden Walzen mit Unterbrüchen zur Bildung von Ankerflächen und/oder Ankern in den Ankerkerben bzw. den Bruchkerben versehen sind, die Ankerlinien auf dem Metallband bilden, wozu die Walzen in ihren Gleichlaufeigenschaften zur exakten Positionierung der Ankerlinien bezüglich Ober- und Unterwalze einstellbar und zusätzlich mit einer einstellbaren Axialführung der beiden Walzen zueinander ausgestattet sind.

Zur Bildung der Metallfasern kann ein Metallband in Längsrichtung an beiden Metallbandflächen mit Bruchkerben versehen werden.

Zur späteren Trennung kann ein die Trennstege biegeverformender Walkprozess verwendet werden.

Das Metallband kann vor dem Aufwickeln in der Aufhaspeleinrichtung eine kombinierte Ritz- und Richteinheit zum Tieferkerben, Einritzen oder Planieren der Anker in den Bruchkerben mit einer oder mehreren Ritzwalzenpaaren durchlaufen.

Im Rahmen der Erfindung besteht insbesondere auch die Möglichkeit, dass das Metallband in der optionalen Ritz- und Richteinheit nach den Ritzwalzenpaaren optional mehrere Walkstationen durchläuft und danach eine optische Erfassung der in den Ankerkerben vorhandenen, senkrecht zur Laufrichtung des Metallbands auf Ankerlinien angeordneten Ankern erfolgt und hiermit eine Steuerung einer Längsteilschere erfolgt, die gegebenenfalls eine Vortrennung der Metallfaseradern der Anker im Bruchkerbenbereich vornimmt, worauf eine Längsteilwalze die vorgetrennten Fasern des Metallbands im Wesentlichen im Ankerbereich trennt, wobei das profilierte Metallband von einer nachgeordneten Zugwalze durch die Trennwalze gezogen wird, und diese aber auch einen unterstützenden, geregelten eigenen Antrieb benötigt, wobei vor der Aufhaspeleinrichtung optional eine Richteinheit mit einer Schopfschere und eine weitere Richteinheit zum Vorbiegen des profilierten Metallbands vor dem Aufhaspeln vorgesehen ist. Statt des Aufhaspeln können jedoch auch gleich die Fasern hergestellt werden, insbesondere dann, wenn keine Vergütung vorgesehen ist. Durch die relativ dünnen Trennstege wird, auch nach einem erfolgten Vergütungsprozess des Metallbandes, eine besonders einfache und störungsarme Längstrennung mittels einer geschleppten und gegebenenfalls mit unterstützendem Antrieb versehenen Trennwalze ermöglicht.

Im Anschluss an diese Verfahrensschritte kann in Abhängigkeit vom eingesetzten Ausgangsmaterial bzw. der Eigenschaft des gewünschten Endprodukts - das profilierte Metallband einem gängigen und üblichen Vergütungsprozess unterzogen werden, das daher hier nicht näher beschrieben werden soll.

Weiter sieht die Erfindung vor, dass in einer alternativen zweiten Fertigungslinie nach der optionalen Ritzeinheit und der Vortrennung das profilierte und gegebenenfalls vergütete Metallband von einer angetriebenen und geregelten Ablaufhaspel abgerollt und einem wiederum mit einer Überholkupplung ausgestatteten Richtwerk zum Richten und Einziehen des Bandanfangs zugeführt wird, wobei der Bandanfang durch eine nachgeordnete Schopfschere mit einem sauberen, planen Anschnitt versehen wird, worauf nach Durchlaufen einer planen, engen Bandführung eine optische Erfassung der in den Ankerkerben vorhandenen, senkrecht zur Laufrichtung des Metallbands auf Ankerlinien angeordneten Ankern erfolgt, die der späteren Steuerung einer Querteilschere dient, und nach Durchlaufen einer weiteren planen, engen Bandführung die vollständige Trennung der Metallfasern voneinander in geschleppten oder mit unterstützendem Antrieb versehenen Längsteilwalzen erfolgt, wobei hierzu die getrennten Metallfasern durch eine enge Führung mit großer Zugbelastung einer Zugwalze gezogen werden und weiterhin längsgetrennt eng geführt in eine Querteilschere geschoben und schließlich abgelängt einem Auffangbehältnis für die vereinzelten Metallfasern zugeführt werden.

Zur Durchführung des vorbeschriebenen Verfahrens in vorrichtungsmäßiger Hinsicht, bei welchem Metallfasern in Form von Stahlfasern aus bandförmigem Flachmaterial gefertigt werden, wobei die Metallfasern im wesentlichen rechteckigen Querschnitt aufweisen und wenigstens eine, bevorzugt beide der jeweils breiteren Faserseitenflächen mit wenigstens einer in Faserlängsrichtung verlaufenden V-förmigen Ankerkerbe versehen ist/sind und zur Bildung der Metallfasern ein Metallband in Längsrichtung vorzugsweise an beiden Metallbandflächen mit Bruchkerben versehen wird, wodurch an deren Kerbgrund Trennstege gebildet werden, die bei späterer Trennung, gegebenenfalls auch nach einem die Trennstege biegeverformenden Walkprozess, gratarme und bruchrauhe Trennflächen bilden, schlägt die Erfindung vor, dass in einer ersten Fertigungslinie eine angetriebene und gesteuerte Ablaufhaspel für das Metallband in Form eines Coils vorgesehen ist, ferner eine Richt- und Transporteinheit für das Metallband, die mit einer einen Freilauf ermöglichenden Überholkupplung versehen ist, ferner eine nachgeordnete Schopfschere zur Formierung zumindest des Bandanfangs, weiter eine aus Oberwalze und Unterwalze bestehende, als Walzeinheit ausgebildete Profilierwalze zur Einbringung der Ankerkerben sowie der Bruchkerben in das Metallband, wobei die Gleichlaufeigenschaften beider Walzen sowie deren Axialführung zueinander präzise einstellbar ist, weiter gegebenenfalls mit einer kombinierten Ritz- und Richteinheit mit einer oder mehreren Ritzwalzenpaaren zum Kerben, Einritzen oder auch, soweit gewünscht, zum Planieren der Anker in den Bruchkerben in dem Metallband und schließlich mit einer Aufhaspeleinrichtung zum erneuten Aufwickeln des Metallbands als Coil.

Hierbei ist von Vorteil und daher im Rahmen der Erfindung bevorzugt, dass hinter den Ritzwalzenpaaren bedarfsweise mehrere Walkstationen für das Metallband vorgesehen sind, dass weiter eine optische Erfassungseinheit für die in den Ankerkerben vorhandenen, senkrecht zur Laufrichtung des Metallbands auf Ankerlinien angeordneten Anker vorgesehen ist, durch die eine Steuerung einer Längsteilwalze erfolgt, die eine Vortrennung der Anker der Metallfaseradern im Bruchkerbenbereich ermöglicht, wobei für den Vortrieb des profilierten Metallbands eine nachgeordnete Zugwalze vorgesehen ist, und dass vor der Aufhaspeleinrichtung optional eine Richteinheit mit einer Schopfschere zum Vorbiegen des profilierten Metallbands vor dem Aufhaspeln angeordnet ist, wobei statt des Aufhaspelns auch die zum Längs- und Querteilen erforderlichen Einheiten gemäß einer zweiten Fertigungslinie vorgesehen sein können.

Zur Durchführung der zweiten Fertigungslinie ist es von Vorteil wenn zum Abwickeln des nun profilierten und/oder optional vergüteten Metallbands wiederum eine angetriebene und geregelte Ablaufhaspel sowie ein wiederum mit einer Überholkupplung ausgestattetes Richtwerk zum Richten und Einziehen des Bandanfangs vorgesehen ist, weiter eine Schopfschere zur Anbringung eines sauberen, planen Anschnitts am Bandanfang, ferner eine optische Erfassungseinrichtung zur Ermittlung der in den Anker- und Bruchkerben vorhandenen, senkrecht zur Laufrichtung des Metallbands auf Ankerlinien angeordneten Ankern, wobei zur Führung des Metallbands vor und hinter der optischen Erfassungseinrichtung plane, enge Bandführungen für die voneinander teilgetrennten Metallfasern vorgesehen sind, dass weiter geschleppte oder optional antriebsseitig unterstützte Längsteilwalzen zur vollständigen Trennung der Metallfaseradern voneinander sowie eine Zugwalze vorgesehen sind, wobei für die längsgetrennten Metallfaseradern eine enge Führung zur von der optischen Erfassungseinrichtung gesteuerten Querteilschere, die die Metallfaseradern ablängt, vorzusehen ist. Die Fasern werden einem Auffangbehältnis zugeführt.

Dabei hat es sich als vorteilhaft erwiesen, wenn die Ritz- und Richteinheit mit mehreren, vorzugsweise zwei Ritzwalzenpaaren versehen ist.

Im Folgenden wird die Erfindung an Hand eines Ausführungsbeispiels in Form einer Vorrichtung näher erläutert; es zeigen:
Fig. 1 eine schematische Darstellung einer Fertigungslinie nach der Erfindung vom Kaltband zum profilierten Metallband in einer ersten Ausgestaltung,
Fig. 2 eine der Fig. 1 entsprechende Darstellung einer alternativen Ausgestaltung in Draufsicht a) und Schnitt b), wobei auch sämtliche nur optional vorgesehenen Baueinheiten wiedergegeben sind,
Fig. 3 einen Ausschnitt des gekerbten Metallbandes mit den Ankerlinien und dem nicht getrennten Stegbereich (Stegrest),
Fig. 4 die sich an den Gegenstand nach den Fig. 1 oder 2 anschließende Fertigungslinie vom profilierte Metallband zur profilierten Metallfaser in Seitenansicht,
Fig. 5 eine Metallfaser im Schnitt.

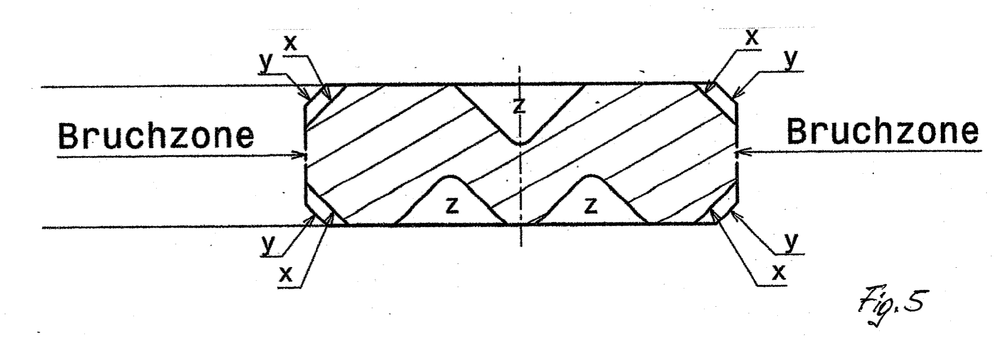

Die in der Zeichnung dargestellte Anordnung ist vorgesehen zur Durchführung eines Verfahrens, das der Herstellung von Metallfasern, insbesondere von Stahlfasern, aus bandförmigem Flachmaterial dient. Diese Metallfasern, beispielhaft in Fig. 5 im Schnitt dargestellt, weisen im Wesentlichen rechteckigen Querschnitt auf, wobei wenigstens eine, bevorzugt aber beide der jeweils breiteren Faserseitenflächen mit wenigstens einer in Faserlängsrichtung verlaufenden V-förmigen Ankerkerbe versehen sind. Um die Metallfasern auszubilden, wird ein Metallband in Längsrichtung vorzugsweise an beiden Metallbandflächen mit Bruchkerben versehen, wodurch an deren Kerbgrund Trennstege gebildet werden. Diese Trennstege bilden bei der späteren Trennung, gegebenenfalls erst nach einem die Trennstege biegeverformenden Walkprozess, gratarme und bruchrauhe Trennflächen.

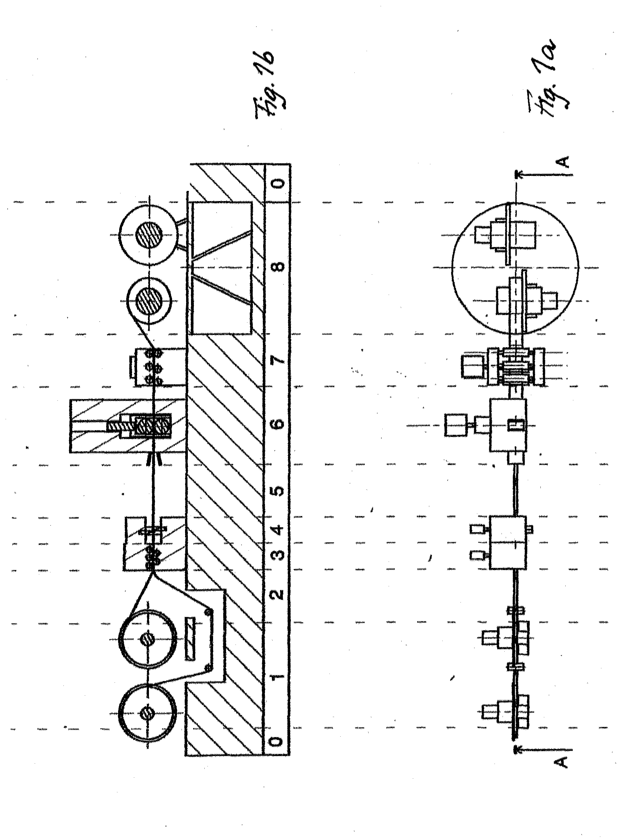

Als Metallband kommt hier in der Regel ein zunächst gegenüber der für die Metallfaser bei der späteren Verwendung geforderten Festigkeit angepasster Werkstoff zum Einsatz. Das Metallband wird hierbei gemäß Fig. 1 in einer ersten Fertigungslinie bei 1 in Form eines Coils von einer angetriebenen und gesteuerten Ablaufhaspel einer Richt- und Transporteinheit 3 zugeführt, die mit einer einen Freilauf ermöglichenden Überholkupplung versehen ist. Sie weist ferner eine nachgeordnete, zumindest den Bandanfang formierende Schopfschere 4 auf.

Anschließend wird das Metallband einer aus Oberwalze und Unterwalze bestehenden, als Walzwerkeinheit ausgebildeten Profilierwalze 6 zugeführt, die der Einbringung sowohl der auf der Ober- und Unterseite axial gegeneinander versetzt angeordneten Ankerkerben als auch der Bruchkerben dient, deren Unterbrüche die Ankerlinien bilden. Die Profilierwalze 6 verfügt über präzise einstellbare Gleichlaufeigenschaften beider Walzen, um eine exakte Positionierung der Ankerlinien auf der Oberwalze zur Unterwalze zu erreichen. Weiter ist sie mit ebenfalls stabiler und einstellbarer Axialführung der beiden Walzen zueinander ausgestattet. Anschließend durchläuft das Metallband, wenn benötigt, eine kombinierte Ritz- und Richteinheit 7 zum Einritzen der Anker in den Bruchkerben mit einer oder mehreren Ritzwalzenpaaren, wobei sich vorzugsweise zwei Ritzwalzenpaare bewährt haben. Schließlich wird das Metallband von einer Aufhaspeleinrichtung 8 wieder als Coil aufgewickelt. Bei der Anordnung der einzelnen, eben beschriebenen Komponenten ist darauf zu achten, dass sowohl hinter der Ablaufhaspel 1 als auch hinter der Schopfschere 4 ein ausreichender Freiraum 2 bzw. 5 zum Aufziehen und Auffädeln des Coil-Anfangs als auch zur Vorbereitung des Ringanfangs vorhanden sein muss.

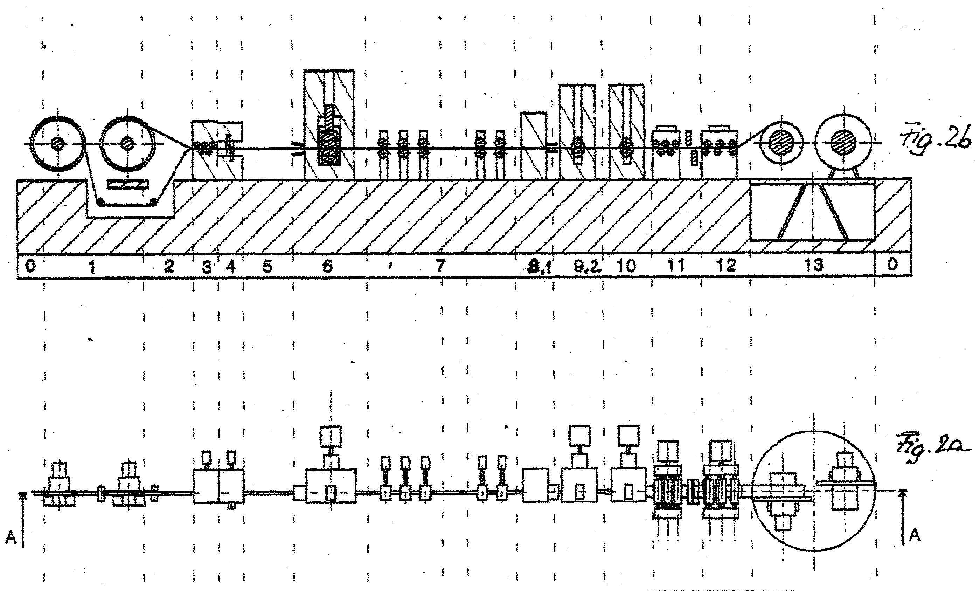

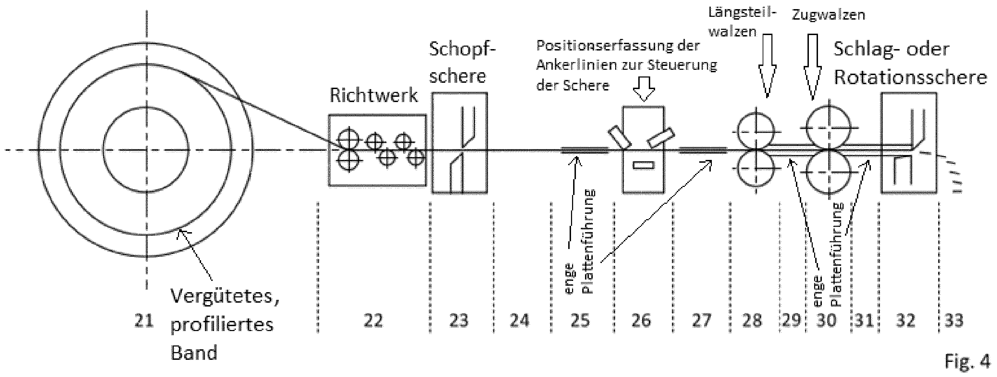

Bei einem alternativen Verfahrensablauf gemäß der Fig. 2, in der die für die Positionen 1 bis 7 gleiche Bezugszeichen verwendet sind, durchläuft das Metallband in der Ritz- und Richteinheit 7 nach den Ritzwalzenpaaren optional mehrere Walkstationen, worauf eine optische Erfassung 9.1 in den Kerben vorhandenen, senkrecht zur Laufrichtung des Metallbands auf Ankerlinien angeordneten Ankern erfolgt. Dies ermöglicht die Ansteuerung einer Längsteilwalze 9.2, die eine Vortrennung der Metallfaseradern im Ankerbereich der Bruchkerben vornimmt, wobei das profilierte Metallband von einer nachgeordneten Zugwalze 10 durch die Längsteilwalze gezogen wird. Dadurch benötigt die Längsteilwalze keinen oder nur einen unterstützenden eigenen Antrieb. Vor der Aufhaspeleinrichtung 13 kann optional eine Richteinheit 11 mit einer Schopfschere und eine weitere Richteinheit 12 zum Vorbiegen des profilierten Metallbands vor dem Aufhaspeln vorgesehen sein. Für Metallfasern ohne Vergütung sind die Maschineneinheiten nach den Ziffern 11 - 13 durch die Maschineneinheiten 25 - 33 gemäß Fig. 4 zu ersetzen.

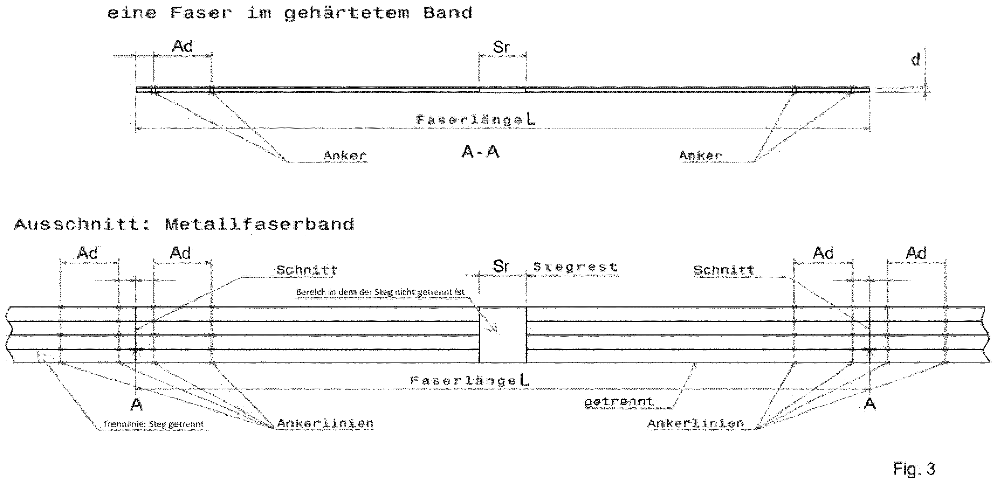

In Fig. 3 ist eine Seitenansicht sowie eine Draufsicht auf das Metallfaserband gezeigt, worin die Bereiche erkennbar sind, in welchen die Stege getrennt bzw. nicht getrennt sind. Weiter sind die Ankerlinien erkennbar sowie die Schnittlinie A, an der die Fasern abgelängt werden.

Danach kann das profilierte Metallband optional in nicht näher dargestellter Weise in einem anschließenden Verfahrensschritt einem gängigen und üblichen Vergütungsprozess unterzogen werden.

In einer zweiten, in der Fig. 4 schematisch dargestellten Fertigungslinie wird das profilierte und vergütete Metallband von einer angetriebenen und geregelten Ablaufhaspel 21 abgerollt und einem wiederum mit einer Überholkupplung ausgestatteten Richtwerk 22 zum Richten und Einziehen des Bandanfangs zugeführt. Dabei wird der Bandanfang durch eine nachgeordnete Schopfschere 23 mit einem sauberen, planen Anschnitt versehen. Auch hier ist wiederum für einen ausreichenden Freiraum 24 hinter der Schopfschere 23 zur Bearbeitung bzw. zum Einfädeln des Bandanfangs vorzusehen.

Nach Durchlaufen einer planen, engen Bandführung 25 erfolgt bei 26 eine optische Erfassung der in den Ankerkerben vorhandenen, senkrecht zur Laufrichtung des Metallbands auf Ankerlinien angeordneten Ankern, die der späteren Steuerung einer Querteilschere dient. Nach Durchlaufen einer weiteren planen, engen Bandführung 27 erfolgt die vollständige Trennung der Metallfasern voneinander in geschleppten oder mit unterstützendem Antrieb versehenen Längsteilwalzen 28, wobei hierzu die getrennten Metallfasern durch eine enge Führung 29 mit großer Zugbelastung einer Zugwalze 30 zugeführt werden.

Nach weiterhin enger Plattenführung 31 werden die längsgeteilten Metallfaseradern in eine Querteilschere 32 geschoben und abgelängt und schließlich einem Auffangbehältnis 33 für die vereinzelten Metallfasern zugeführt.

## Patentansprüche

1. Verfahren zur Herstellung von Metallfasern nämlich von vergüteten oder unvergüteten Stahlfasern aus bandförmigem Flachmaterial, wobei die Metallfasern rechteckigen Querschnitt aufweisen und wenigstens eine der jeweils breiteren Faserseitenflächen mit wenigstens einer in Faserlängsrichtung verlaufenden V-förmigen Ankerkerbe versehen ist, wobei zur Bildung der Metallfasern ein Metallband in Längsrichtung mit Bruchkerben versehen wird, wodurch an deren Kerbgrund Trennstege gebildet werden, die bei späterer Trennung gratarme und bruchrauhe Trennflächen bilden, **dadurch gekennzeichnet, dass** als Metallband zunächst ein gegenüber der für die Metallfaser bei der späteren Verwendung geforderten Festigkeit angepasster Werkstoff zum Einsatz kommt, wobei das Metallband in einer ersten Fertigungslinie in Form eines Coils von einer angetriebenen und gesteuerten Ablaufhaspel (1) einer Richt- und Transporteinheit (3) zugeführt wird, die mit einer einen Freilauf ermöglichenden Überholkupplung versehen ist und eine nachgeordnete, zumindest den Bandanfang formierende Schopfschere (4) aufweist, worauf das Metallband einer aus Oberwalze und Unterwalze bestehenden, als Walzwerkzeug ausgebildeten Profilierwalze (6) zur Einbringung der Ankerkerben und der Bruchkerben zugeführt wird, und dass das Metallband schließlich von einer Aufhaspeleinrichtung (8) wieder als Coil aufgewickelt oder in der entsprechenden Fertigungslinie weitergeführt wird.

2. Verfahren nach Anspruch 1, **dadurch gekennzeichnet, dass** beide der jeweils breiteren Faserseitenflächen mit wenigstens einer in Faserlängsrichtung verlaufenden V-förmigen Ankerkerbe versehen sind.

3. Verfahren nach Anspruch 1 oder 2, **dadurch gekennzeichnet, dass** die Profilierwalze (6) sowohl auf der Ober- und der Unterseite axial gegeneinander versetzt angeordnete Ankerkerben als auch Bruchkerben einbringt, wobei die beiden Walzen mit Unterbrüchen zur Bildung von Ankerflächen und/oder Ankern in den Ankerkerben bzw. den Bruchkerben versehen sind, die Ankerlinien auf dem Metallband bilden, wozu die Walzen in ihren Gleichlaufeigenschaften zur exakten Positionierung der Ankerlinien bezüglich Ober- und Unterwalze einstellbar und zusätzlich mit einer einstellbaren Axialführung der beiden Walzen zueinander ausgestattet sind.

4. Verfahren nach einem der Ansprüche 1 bis 3, **dadurch gekennzeichnet, dass** zur Bildung der Metallfasern ein Metallband in Längsrichtung an beiden Metallbandflächen mit Bruchkerben versehen wird.

5. Verfahren nach einem der Ansprüche 1 bis 4, **dadurch gekennzeichnet, dass** zur späteren Trennung ein die Trennstege biegeverformender Walkprozess verwendet wird.

6. Verfahren nach einem der Ansprüche 1 bis 5, **dadurch gekennzeichnet, dass** das Metallband vor dem Aufwickeln in der Aufhaspeleinrichtung (8) eine kombinierte Ritz- und Richteinheit (7) zum Tieferkerben, Einritzen oder Planieren der Anker in den Bruchkerben mit einer oder mehreren Ritzwalzenpaaren durchläuft

7. Verfahren nach Anspruch 6, **dadurch gekennzeichnet, dass** das Metallband in der Ritz- und Richteinheit (7) nach den Ritzwalzenpaaren mehrere Walkstationen durchläuft und danach eine optische Erfassung (9.1) der in den Kerben vorhandenen, senkrecht zur Laufrichtung des Metallbands auf Ankerlinien angeordneten Ankern erfolgt und hiermit eine Steuerung einer Längsteilwalze (9.2) erfolgt, die eine Vortrennung der Metallfaseradern im Ankerbereich der Bruchkerben vornimmt, wobei das profilierte Metallband von einer nachgeordneten Zugwalze (10) durch die Längsteilwalze (9.2) gezogen wird, so dass die Längsteilwalze (9.2) keinen oder nur einen unterstützenden eigenen Antrieb benötigt.

8. Verfahren nach Anspruch 7, **dadurch gekennzeichnet, dass** vor der Aufhaspeleinrichtung (13) eine Richteinheit (11) mit einer Schopfschere und eine weitere Richteinheit (12) zum Vorbiegen des profilierten Metallbands vor dem Aufhaspeln vorgesehen ist.

9. Verfahren nach einem der Ansprüche 1 bis 8, **dadurch gekennzeichnet, dass** das profilierte Metallband in einem anschließenden Verfahrensschritt einem Vergütungsprozess unterzogen wird.

10. Verfahren nach den Ansprüchen 1 bis 9, **dadurch gekennzeichnet, dass** in einer zweiten Fertigungslinie das profilierte und/oder vergütete Metallband von einer angetriebenen und geregelten Ablaufhaspel (21) abgerollt und einem wiederum mit einer Überholkupplung ausgestatteten Richtwerk (22) zum Richten und Einziehen des Bandanfangs zugeführt wird, wobei der Bandanfang durch eine nachgeordnete Schopfschere (23) mit einem Anschnitt versehen wird, worauf nach Durchlaufen einer planen Bandführung (25) eine optische Erfassung (26) der in den Ankerkerben vorhandenen, senkrecht zur Laufrichtung des Metallbands auf Ankerlinien angeordneten Ankern erfolgt, die der späteren Steuerung einer Querteilschere (12) dient, und nach Durchlaufen einer weiteren planen Bandführung (27) die vollständige Trennung der Metallfasern voneinander in geschleppten oder mit unterstützendem Antrieb versehenen Längsteilwalzen (28) erfolgt, wobei hierzu die getrennten Metallfasern durch eine Führung (29) mit Zugbelastung einer Zugwalze (30) gezogen werden und weiterhin geführt (31) in eine Querteilschere (32) geschoben und abgelängt und schließlich einem Auffangbehältnis (33) für die vereinzelten Metallfasern zugeführt werden.

11. Vorrichtung zur Durchführung des Verfahrens nach den Ansprüchen 1 bis 10, bei welchem Metallfasern in Form von Stahlfasern aus bandförmigem Flachmaterial gefertigt werden, wobei die Metallfasern im Wesentlichen rechteckigen Querschnitt aufweisen und wenigstens eine, bevorzugt beide der jeweils breiteren Faserseitenflächen mit wenigstens einer in Faserlängsrichtung verlaufenden V-förmigen Ankerkerbe versehen ist/sind und zur Bildung der Metallfasern ein Metallband in Längsrichtung vorzugsweise an beiden Metallbandflächen mit Bruchkerben versehen wird, wodurch an deren Kerbgrund Trennstege gebildet werden, die bei späterer Trennung, gegebenenfalls auch nach einem die Trennstege biegeverformenden Walkprozess, gratarme und bruchrauhe Trennflächen bilden, **dadurch gekennzeichnet, dass** in einer ersten Fertigungslinie eine angetriebene und gesteuerte Ablaufhaspel (1) für das Metallband in Form eines Coils vorgesehen ist, ferner eine Richt- und Transporteinheit (3) für das Metallband, die mit einer einen Freilauf ermöglichenden Überholkupplung versehen ist, ferner eine nachgeordnete Schopfschere (4) zur Formierung zumindest des Bandanfangs, weiter eine aus Oberwalze und Unterwalze bestehende, als Walzwerkeinheit ausgebildete Profilierwalze (6) zur Einbringung der Ankerkerben sowie der Bruchkerben in das Metallband, wobei die Gleichlaufeigenschaften beider Walzen sowie deren Axialführung zueinander präzise einstellbar ist, weite mit einer kombinierten Ritz- und Richteinheit (7) mit einer oder mehreren Ritzwalzenpaaren zum tiefer Kerben, Einritzen oder auch, soweit gewünscht, zum Planieren der Anker in den Bruchkerben in dem Metallband und schließlich mit einer Aufhaspeleinrichtung (8) zum erneuten Aufwickeln des Metallbands als Coil.

12. Vorrichtung nach Anspruch 11, **dadurch gekennzeichnet, dass** hinter den Ritzwalzenpaaren bedarfsweise mehrere Walkstationen für das Metallband vorgesehen sind, dass weiter eine optische Erfassungseinheit (9.1) für die in den Ankerkerben vorhandenen, senkrecht zur Laufrichtung des Metallbands auf Ankerlinien angeordneten Anker vorgesehen ist, durch die eine Steuerung einer Längsteilwalze (9.2) erfolgt, die eine Vortrennung der Metallfaseradern der Anker im Bruchkerbenbereich ermöglicht, wobei für den Vortrieb des profilierten Metallbands eine nachgeordnete Zugwalze (10) vorgesehen ist, und dass vor der Aufhaspeleinrichtung (13) optional eine Richteinheit (11) mit einer Schopfschere zum Vorbiegen des profilierten Metallbands vor dem Aufhaspeln angeordnet ist.

13. Vorrichtung nach den Ansprüchen 11 und 12 zur Durchführung einer zweiten Fertigungslinie, **dadurch gekennzeichnet, dass** zum Abwickeln des nun profilierten und vergüteten Metallbands wiederum eine angetriebene und geregelte Ablaufhaspel (21) sowie ein wiederum mit einer Überholkupplung ausgestattetes Richtwerk (22) zum Richten und Einziehen des Bandanfangs vorgesehen ist, weiter eine Schopfschere (23) zur Anbringung eines sauberen, planen Anschnitts am Bandanfang, ferner eine optische Erfassungseinrichtung (26) zur Ermittlung der in den Anker- und Bruchkerben vorhandenen, senkrecht zur Laufrichtung des Metallbands auf Ankerlinien angeordneten Ankern, wobei zur Führung des Metallbands vor und hinter der optischen Erfassungseinrichtung (26) plane, enge Bandführungen (25) bzw. (27) für die voneinander teilgetrennten Metallfasern vorgesehen sind, dass weiter geschleppte oder optional antriebsseitig unterstützte Längsteilwalzen (28) zur vollständigen Trennung der Metallfaseradern voneinander sowie eine Zugwalze (30) vorgesehen sind, wobei die Metallfaseradern von der Zugwalze (30) durch eine enge Führung (29) einer von der optischen Positionserfassung (26) gesteuerten Querteilschere (32) zum Ablängen geschoben und die Fasern einem Auffangbehältnis (33) zugeführt werden.

14. Vorrichtung nach den Ansprüchen 11 bis 13, **dadurch gekennzeichnet, dass** die Ritz- und Richteinheit (7) mit mehreren, vorzugsweise zwei Ritzwalzenpaaren versehen ist.

## Claims

1. A method for producing metal fibers, namely tempered or untempered steel fibers from strip-shaped flat material, the metal fibers having a rectangular cross section and at least one of the respectively wider fiber side faces being provided with at least one V-shaped anchor notch extending in the longitudinal direction of the fibers, a metal strip being provided with fracture notches in the longitudinal direction in order to form the metal fibers, whereby separating webs are formed at the notch base thereof, which form low-burr and fracture-rough separating surfaces during later separation, **characterized in that** a material adapted relative to the strength required for the metal fiber in its later use is initially used as the metal strip, the metal strip in the form of a coil being fed to a straightening and transport unit (3) by a driven and controlled uncoiler (1) in a first production line, which straightening and transport unit is provided with an overrunning clutch enabling freewheeling and has a downstream crop shear (4), which forms at least the beginning of the strip, whereupon the metal strip is fed to a profiling roll (6), which consists of an upper roll and a lower roll and is in the form of a rolling tool, for introducing the anchor notches and the fracture notches, and **in that** the metal strip is finally rewound as a coil by a coiling device (8) or fed further in the corresponding production line.

2. The method according to claim 1, **characterized in that** the two respectively wider fiber side faces are provided with at least one V-shaped anchor notch extending in the longitudinal direction of the fibers.

3. The method according to claim 1 or 2, **characterized in that** the profiling roll (6) introduces anchor notches and fracture notches arranged axially offset from one another on both the upper and lower sides, the two rolls being provided with interruptions for forming anchor surfaces and/or anchors in the anchor notches or the fracture notches, which form anchor lines on the metal strip, for which purpose the synchronization properties of the rolls are adjustable for the precise positioning of the anchor lines with respect to the upper and lower rolls and are additionally equipped with an adjustable axial guidance of the two rolls relative to one another.

4. The method according to any of claims 1 to 3, **characterized in that**, to form the metal fibers, a metal strip is provided with fracture notches in the longitudinal direction on both metal strip faces.

5. The method according to any of claims 1 to 4, **characterized in that**, for later separation, a rolling process which deforms the separating webs by bending is used.

6. The method according to any of claims 1 to 5, **characterized in that** the metal strip passes through a combined scoring and straightening unit (7) having one or more scoring roller pairs for deeper notching, scoring or leveling the anchors in the fracture notches prior to rewinding in the coiling device (8)

7. The method according to claim 6, **characterized in that** the metal strip passes through several rolling stations in the scoring and straightening unit (7) after the scoring roller pairs, and thereafter an optical detection (9.1) of the anchors present in the notches and arranged on anchor lines perpendicularly to the direction of travel of the metal strip is carried out, and therewith a control of a longitudinal dividing roll (9.2) is carried out, which carries out a pre-separation of the metal fiber strands in the anchor region of the fracture notches, the profiled metal strip being drawn through the longitudinal dividing roll (9.2) by a downstream drawing roll (10) such that the longitudinal dividing roll (9.2) requires no drive or only a supporting drive of its own.

8. The method according to claim 7, **characterized in that** a straightening unit (11) having a crop shear and a further straightening unit (12) for pre-bending the profiled metal strip prior to coiling are provided upstream of the coiling device (13).

9. The method according to any of claims 1 to 8, **characterized in that** the profiled metal strip is subjected to a tempering process in a subsequent process step.

10. The method according to claims 1 to 9, **characterized in that** in a second production line the profiled and/or tempered metal strip is uncoiled from a driven and controlled uncoiler (21) and fed to a straightening unit (22), again equipped with an overrunning clutch, for straightening and drawing in the beginning of the strip, the beginning of the strip being provided with a section by a downstream crop shear (23), whereupon, after passing through a flat strip guide (25), an optical detection (26) of the anchors present in the anchor notches and arranged on anchor lines perpendicular to the direction of travel of the metal strip is carried out, which serves for the later control of a transverse dividing shear (12), and after passing through a further flat strip guide (27), the complete separation of the metal fibers from one another is carried out in dragged longitudinal dividing rolls (28) or longitudinal dividing rolls provided with a supporting drive, the separated metal fibers, for this purpose, being drawn through a guide (29) with a tensile load of a drawing roll (30) and further being pushed in a guided (31) manner into a transverse dividing shear (32) and cut to length and finally fed to a collecting container (33) for the separated metal fibers.

11. A device for carrying out the method according to claims 1 to 10, in which metal fibers in the form of steel fibers are produced from strip-shaped flat material, the metal fibers having a substantially rectangular cross section and at least one, preferably both, of the respectively wider fiber side faces being provided with at least one V-shaped anchor notch extending in the longitudinal direction of the fibers and, to form the metal fibers, a metal strip being provided with fracture notches in the longitudinal direction, preferably on both metal strip faces, whereby separating webs are formed at the notch base thereof, which form low-burr and fracture-rough separating surfaces during later separation, optionally also after a rolling process which deforms the separating webs by bending,
**characterized in that** a driven and controlled uncoiler (1) for the metal strip in the form of a coil is provided in a first production line, further a straightening and transport unit (3) for the metal strip, which is provided with an overrunning clutch enabling freewheeling, further a downstream crop shear (4) for forming at least the beginning of the strip, further a profiling roll (6), which consists of an upper roll and a lower roll and is in the form of a rolling tool unit, for introducing the anchor notches and the fracture notches into the metal strip, the synchronization properties of the two rolls and their axial guidance relative to one another being precisely adjustable, further comprising a combined scoring and straightening unit (7) having one or more scoring roller pairs for deeper notching, scoring, or also, if desired, for leveling the anchors in the fracture notches in the metal strip, and finally comprising a coiling device (8) for rewinding the metal strip as a coil.

12. The device according to claim 11, **characterized in that**, if required, a plurality of rolling stations for the metal strip are provided downstream of the scoring roller pairs, **in that** further an optical detection unit (9.1) is provided for the anchors present in the anchor notches and arranged on anchor lines perpendicular to the direction of travel of the metal strip, by means of which a control of a longitudinal dividing roll (9.2) is carried out, which enables a pre-separation of the metal fiber strands of the anchors in the region of the fracture notches, a downstream drawing roll (10) being provided for driving the profiled metal strip, and **in that** a straightening unit (11) having a crop shear for the pre-bending of the profiled metal strip prior to the coiling is optionally arranged upstream of the coiling device (13).

13. The device according to claims 11 and 12 for carrying out a second production line, **characterized in that** for unwinding the now profiled and tempered metal strip, there is again provided a driven and controlled uncoiler (21) and a straightening unit (22), again equipped with an overrunning clutch, for straightening and drawing in the beginning of the strip, further a crop shear (23) for applying a clean, flat section to the beginning of the strip, further an optical detection device (26) for detecting the anchors present in the anchor and fracture notches and arranged on anchor lines perpendicular to the direction of travel of the metal strip, flat, narrow strip guides (25) or (27) being provided for the metal fibers which have been partially separated from one another for guiding the metal strip in front of and behind the optical detection device (26), **in that** dragged longitudinal dividing rolls (28) or optionally drive-supported longitudinal dividing rolls are provided for completely separating the metal fiber strands from one another, as well as a drawing roll (30), the metal fiber strands being pushed by the drawing roll (30) through a narrow guide (29) of a transverse dividing shear (32) controlled by the optical position detection device (26) for cutting to length, and the fibers being fed into a collecting container (33).

14. The device according to claims 11 to 13, **characterized in that** the scoring and straightening unit (7) is provided with a plurality of, preferably two, scoring roller pairs.

## Revendications

1. Procédé pour la fabrication de fibres métalliques, à savoir de fibres d'acier traitées ou non traitées par trempe et revenu, à partir d'un matériau plat en forme de bande, dans lequel les fibres métalliques présentent une section transversale rectangulaire et au moins l'une des surfaces latérales de fibres respectivement plus larges est pourvue d'au moins une encoche d'ancrage en forme de V s'étendant dans la direction longitudinale de fibres, dans lequel, pour former les fibres métalliques, une bande métallique est pourvue d'encoches de rupture dans la direction longitudinale, moyennant quoi sont formées, sur le fond des encoches, des nervures de séparation qui, lors de la séparation ultérieure, forment des surfaces de séparation pauvres en bavures et rugueuses à la rupture, **caractérisé en ce que** l'on utilise d'abord, comme bande métallique, un matériau adapté à la résistance requise pour la fibre métallique lors de l'utilisation ultérieure, dans lequel la bande métallique est amenée, dans une première ligne de fabrication, à une unité de dressage et de transport (3) sous la forme d'une bobine par un dévidoir (1) entraîné et commandé, laquelle unité est pourvue d'un embrayage à roue libre permettant une course libre et qui présente une cisaille à ébouter (4) disposée en aval et formant au moins le début de la bande, après quoi la bande métallique est amenée à un cylindre de profilage (6) constitué d'un cylindre supérieur et d'un cylindre inférieur et réalisé sous forme d'outil de laminage pour la réalisation des encoches d'ancrage et des encoches de rupture, et **en ce que** la bande métallique est finalement à nouveau enroulée sous forme de bobine par un dispositif d'enroulement (8) ou continue d'être guidée dans la ligne de fabrication correspondante.

2. Procédé selon la revendication 1, **caractérisé en ce que** les deux surfaces latérales de fibres respectivement plus larges sont pourvues d'au moins une encoche d'ancrage en forme de V s'étendant dans la direction longitudinale de fibres.

3. Procédé selon la revendication 1 ou 2, **caractérisé en ce que** le cylindre de profilage (6) réalise aussi bien des encoches d'ancrage disposées de manière à être décalées axialement les unes par rapport aux autres sur la face supérieure et sur la face inférieure que des encoches de rupture, dans lequel les deux cylindres sont pourvus de discontinuités pour former des surfaces d'ancrage et/ou des ancrages dans les encoches d'ancrage ou les encoches de rupture qui forment des lignes d'ancrage sur la bande métallique, les cylindres étant à cet effet réglables en termes de propriétés de synchronisation pour le positionnement exact des lignes d'ancrage par rapport aux cylindres supérieur et inférieur et étant en outre équipés d'un guidage axial réglable des deux cylindres l'un par rapport à l'autre.

4. Procédé selon l'une des revendications 1 à 3, **caractérisé en ce que**, pour la formation des fibres métalliques, une bande métallique est pourvue d'encoches de rupture dans la direction longitudinale sur les deux surfaces de bande métallique.

5. Procédé selon l'une des revendications 1 à 4, **caractérisé en ce que**, pour la séparation ultérieure, un procédé de laminage déformant en flexion les nervures de séparation est utilisé.

6. Procédé selon l'une des revendications 1 à 5, **caractérisé en ce que** la bande métallique, avant d'être enroulée dans le dispositif d'enroulement (8), passe par une unité d'entaillage et de dressage (7) combinée pour entailler plus profondément, inciser ou aplanir les ancrages dans les encoches de rupture avec une ou plusieurs paires de rouleaux d'entaillage.

7. Procédé selon la revendication 6, **caractérisé en ce que** la bande métallique passe par plusieurs postes de déformation dans l'unité d'entaillage et de dressage (7) après les paires de cylindres d'entaillage et ensuite est effectuée une détection optique (9.1) des ancrages présents dans les encoches et disposés sur des lignes d'ancrage perpendiculairement au sens de déplacement de la bande métallique et ainsi, une commande d'un cylindre de séparation transversale (9.2) est effectué, lequel réalise une préséparation des fils de fibres métalliques dans la zone d'ancrage des encoches de rupture, dans lequel la bande métallique profilée est tirée à travers le cylindre de séparation transversale (9.2) par un cylindre de traction (10) disposé en aval, de sorte que le cylindre de séparation transversale (9.2) n'a pas besoin d'un entraînement propre ou a seulement besoin d'un entraînement de soutien.

8. Procédé selon la revendication 7, **caractérisé en ce qu'**avant le dispositif d'enroulement (13) est prévue une unité de dressage (11) comportant une cisaille à ébouter et une autre unité de dressage (12) pour déformer au préalable la bande métallique profilée avant l'enroulement.

9. Procédé selon l'une des revendications 1 à 8, **caractérisé en ce que** la bande métallique profilée est soumise à un processus de traitement par trempe et revenu dans une étape de procédé ultérieure.

10. Procédé selon les revendications 1 à 9, **caractérisé en ce que**, dans une seconde ligne de fabrication, la bande métallique profilée et/ou traitée par trempe et revenu est déroulée d'un dévidoir (21) entraîné et régulé et est amenée à un redresseur (22) équipé à son tour d'un embrayage à roue libre et permettant de redresser et d'étirer le début de la bande, dans lequel le début de la bande est pourvu d'une entaille par une cisaille à ébouter (23) disposée en aval, après quoi, après le passage d'un guidage de bande plan (25), une détection optique (26) des ancrages présents dans les encoches d'ancrage et disposés sur des lignes d'ancrage perpendiculairement au sens de déplacement de la bande métallique est effectuée, laquelle détection optique sert à la commande ultérieure d'une cisaille de séparation transversale (12), et après le passage d'un autre guidage de bande plan (27), la séparation complète des fibres métalliques les unes des autres est effectuée dans des cylindres de séparation transversale (28) entraînés ou pourvus d'un entraînement d'assistance, dans lequel les fibres métalliques séparées sont tirées à travers un guidage (29) avec une charge de traction d'un rouleau de traction (30) et sont en outre guidées (31) dans une cisaille de séparation transversale (32), poussées et coupées à longueur, et sont finalement amenées à un récipient collecteur (33) pour les fibres métalliques séparées.

11. Dispositif pour la mise en œuvre du procédé selon les revendications 1 à 10, dans lequel des fibres métalliques sont fabriquées sous forme de fibres d'acier à partir d'un matériau plat en forme de bande, dans lequel les fibres métalliques présentent une section de séparation transversale sensiblement rectangulaire et au moins une des surfaces latérales de fibres respectivement plus larges, de préférence les deux, sont pourvues d'au moins une encoche d'ancrage en forme de V s'étendant dans la direction longitudinale de fibres et, pour la formation des fibres métalliques, une bande métallique est pourvue d'encoches de rupture dans la direction longitudinale, de préférence sur les deux surfaces de bande métallique, moyennant sont formées, sur le fond des encoches, des nervures de séparation qui, lors d'une séparation ultérieure, le cas échéant également après un processus de déformation déformant par flexion les nervures de séparation, forment des surfaces de séparation pauvres en bavures et rugueuses à la rupture, **caractérisé en ce qu'**est prévu dans une première ligne de fabrication un dévidoir (1) entraîné et commandé pour la bande métallique sous forme de bobine, en outre, une unité de dressage et de transport (3) pour la bande métallique qui est pourvue d'un embrayage à roue libre permettant une roue libre, en outre, une cisaille à ébouter (4) disposée en aval pour former au moins le début de la bande, en outre, un cylindre de profilage (6) constitué d'un cylindre supérieur et d'un cylindre inférieur, réalisé sous la forme d'une unité de laminage et permettant d'introduire les encoches d'ancrage ainsi que les encoches de rupture dans la bande métallique, dans lequel les propriétés de synchronisation des deux cylindres ainsi que leur guidage axial l'un par rapport à l'autre peuvent être réglés avec précision, en outre avec une unité d'entaillage et de dressage (7) combinée comportant une ou plusieurs paires de cylindres d'entaillage pour entailler plus profondément, inciser ou également, si on le souhaite, aplanir les ancrages dans les encoches de rupture dans la bande métallique et enfin avec un dispositif d'enroulement (8) pour l'enroulement de nouveau de la bande métallique sous forme de bobine.

12. Dispositif selon la revendication 11, **caractérisé en ce que**, derrière les paires de cylindres d'entaillage, si nécessaire, plusieurs stations de déformation pour la bande métallique sont prévues, **en ce qu'**une unité de détection optique (9.1) est en outre prévue pour les ancrages présents dans les encoches d'ancrage et disposés sur des lignes d'ancrage perpendiculairement au sens de déplacement de la bande métallique, au moyen de laquelle unité de détection optique une commande d'un cylindre de séparation transversale (9.2) est effectuée, lequel permet une préséparation des fils de fibres métalliques des ancrages dans la zone des encoches de rupture, dans lequel un rouleau de traction (10) disposé en aval est prévu pour l'avancement de la bande métallique profilée, et **en ce qu'**en amont du dispositif d'enroulement (13) est disposée, éventuellement, une unité de dressage (11) comportant une cisaille à ébouter pour déformer au préalable la bande métallique profilée avant l'enroulement.

13. Dispositif selon les revendications 11 et 12 pour la mise en œuvre d'une seconde ligne de fabrication, **caractérisé en ce que**, pour le déroulement de la bande métallique maintenant profilée et traitée par trempe et revenu, à nouveau un dévidoir (21) entraîné et régulé ainsi qu'un redresseur (22) à nouveau équipé d'un embrayage à roue libre et permettant de redresser et d'étirer le début de la bande sont prévus, en outre une cisaille à ébouter (23) pour réaliser une coupe propre et plane au début de la bande, en outre un appareil de détection optique (26) permettant de déterminer les ancrages présents dans les encoches d'ancrage et de rupture et disposés sur des lignes d'ancrage perpendiculairement au sens de déplacement de la bande métallique, dans lequel, pour guider la bande métallique devant et derrière l'appareil de détection optique (26), des guidages de bande (25) ou (27) plans et étroits sont prévus pour les fibres métalliques séparées partiellement les unes des autres, **en ce que** sont en outre prévus des cylindres de séparation transversale (28) entraînés ou éventuellement soutenus côté entraînement pour la séparation complète des fils de fibres métalliques les uns des autres, ainsi qu'un cylindre de traction (30), dans lequel les fils de fibres métalliques sont poussés par le cylindre de traction (30) à travers un guidage étroit (29) d'une cisaille de séparation transversale (32) commandée par l'appareil de détection de position optique (26) pour être coupées à longueur et les fibres sont amenées à un récipient collecteur (33).

14. Dispositif selon les revendications 11 à 13, **caractérisé en ce que** l'unité d'entaillage et de dressage (7) est pourvue de plusieurs, de préférence de deux paires de rouleaux d'entaillage.
